# EUROPÄISCHE PATENTSCHRIFT

(11) **EP 2 557 347 B1**
(45) Veröffentlichungstag und Bekanntmachung des Hinweises auf die Patenterteilung: **30.12.2015**
(21) Anmeldenummer: 12005190.9
(22) Anmeldetag: 13.07.2012
(51) Int. Cl.: F16L 21/02, F16L 21/035, F16L 27/10, F02M 35/10, F02B 33/44, F16J 15/02, F16J 15/06

(54) **Dichtung und Dichtungsanordnung damit**
Seal and corresponding sealing assembly
Joint d'étanchéité et dispositif associé

(30) Priorität: 08.08.2011 DE 102011109675
(43) Veröffentlichungstag der Anmeldung: 13.02.2013
(73) Patentinhaber: Carl Freudenberg KG, 69469 Weinheim (DE)
(72) Erfinder: Jaeck, Thomas, 64658 Fürth (DE); Unger, Hans, 69518 Abtsteinach (DE); Heldmann, Ralph, 69483 Wald-Michelbach (DE); Dirr, Reiner, 80997 München (DE)

(56) Entgegenhaltungen:
- EP-A1- 2 157 340
- EP-A2- 1 024 322
- EP-A2- 1 201 983
- US-A- 3 903 584
- US-A- 5 106 129
- US-A1- 2005 001 423
- US-A1- 2011 079 018

## Beschreibung

### Technisches Gebiet

Die Erfindung betrifft eine Dichtung, umfassend einen rohrförmigen Tragkörper mit Stirnseiten und zwei ringförmige Dichtkörper, wobei der Tragkörper und die Dichtkörper formschlüssig miteinander verbunden sind, wobei der Tragkörper stirnseitig beiderseits jeweils von einem der Dichtkörper aussenumfangsseitig dichtend umschlossen ist, wobei die Dichtkörper jeweils eine innere Dichtlippe aufweisen, die den Außenumfang des Tragkörpers dichtend umschließt und jeweils eine äußere Dichtlippe, wobei die äußeren Dichtlippen jeweils an einen Innenumfang eines die jeweilige Stirnseite des Tragkörpers umschließenden Maschinenelements dichtend anlegbar sind, wobei zumindest einer der Dichtkörper aus einem nicht-elastomeren hochtemperaturbeständigen Dichtungswerkstoff besteht, wobei die Dichtkörper jeweils einen Stützkörper zur Befestigung am Tragkörper aufweisen, wobei die Dichtlippen mit dem entsprechenden Stützkörper verbunden sind, wobei der Stützkörper durch einen Stützring / Führungsring gebildet ist und wobei der Stützring / Führungsring auf der der jeweiligen Stirnseite des Tragkörpers axial abgewandten Seite der Dichtlippen angeordnet und mit diesen verbunden ist.

### Stand der Technik

Eine solche Dichtung und eine solche Dichtungsanordnung damit sind aus der EP 1 201 983 A2 bekannt. Die Dichtkörper sind federkraftbeaufschlagt und bestehen aus einem Fluorpolymer-Werkstoff.
Eine wirkungsvolle Zentrierung der Dichtung gegenüber den abzudichtenden Maschinenelementen erfolgt nicht.

Eine weitere Dichtung ist aus der EP 1 024 322 A1 bekannt. Die vorbekannte Dichtung ist als Steckstück ausgebildet, wobei die Dichtung einen rohförmigen Tragkörper und zwei ringförmige Dichtkörper umfasst. Die Dichtkörper bestehen dabei aus einem elastomeren Werkstoff und sind mit dem Tragkörper adhäsiv, zum Beispiel durch Vulkanisation, verbunden. Dadurch wird ein absolut dichter Verbund des elastomeren Werkstoffs der Dichtkörper mit dem Tragkörper erzielt.

Dichtungen sind außerdem aus der US 2011/0079018 A1, der US 2005/0001423 A1, der US 5,106,129 und der EP 2 157 340 A1 bekannt. Jede der vorbekannten Dichtungen ist als Steckstück ausgebildet, wobei jede Dichtung einen rohrförmigen Tragkörper und zwei ringförmige Dichtkörper umfasst, wobei der Tragkörper stirnseitig beiderseits jeweils von einem Dichtkörper außenumfangsseitig dichtend umschlossen ist. Bei jeder der vorbekannten Dichtungen weist der Tragkörper im Bereich seiner beiden Stirnseiten jeweils eine in radialer Richtung nach außen offene Einbaunut für den jeweiligen Dichtkörper auf, wobei die Dichtkörper in der Einbaunut angeordnet sind. Die Dichtkörper können dabei einteilig oder mehrteilig ausgebildet sein.

Eine weitere Dichtung ist allgemein bekannt und beispielsweise als Steckstück ausgebildet, zur Abdichtung zweier Gehäuse- oder Rohranschlüsse gegenüber Medien wie Gasen oder Flüssigkeiten unter Druck und Temperatur. Die Dichtkörper der vorbekannten Dichtung bestehen dabei aus einem elastomeren Werkstoff. Für Anwendungen, bei denen die Dichtung hohen Temperaturen zwischen 200°C und 300°C ausgesetzt ist, sind Dichtkörper aus elastomeren Werkstoffen nicht geeignet, weil elastomere Dichtkörper bei den genannten hohen Temperaturen während der Gebrauchsdauer beschädigt/zerstört werden.

### Darstellung der Erfindung

Der Erfindung liegt die Aufgabe zugrunde, eine Dichtung der vorbekannten Art derart weiterzuentwickeln, dass diese auch in Temperaturbereichen zwischen 200°C und 300°C während einer langen Gebrauchsdauer zuverlässig abdichtet und dass eine Zentrierung der Dichtung in den abzudichtenden Maschinenelementen erreicht wird, um herstellungsbedingte Abweichungen des Einbauraums, wie beispielsweise ein Achsversatz oder Schiefstellungen der Teile relativ zueinander, ausgleichen zu können und dass die Stirnseiten des Tragkörpers während der bestimmungsgemäßen Verwendung der Dichtung nicht direkt mit den jeweils axial angrenzenden Maschinenelementen in Berührung kommen.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, dass die inneren Dichtlippen axial in Richtung der entsprechenden, jeweils benachbarten Stirnseiten des Tragkörpers verlängert und in radialer Richtung nach innen um die Stinseiten herum gezogen sind.
Dadurch ist sichergestellt, dass die Stirnseiten des Tragkörpers nicht direkt mit den jeweils axial angrenzenden Maschinenelementen in Berührung kommen.

Die Dichtkörper sind formschlüssig mit dem Tragkörper verbunden. Ein solcher Formschluss kann durch in den Außenumfang des Tragkörpers eingeschnappte Dichtkörper erreicht werden. Im Gegensatz zu einer stoffschlüssigen Verbindung, wie sie beispielsweise bei einem Gummi-Metall-Bauteil vorliegt, bestehend aus einem Tragkörper und elastomeren Dichtkörpern, ist ein Formschluss wesentlich einfacher und kostengünstiger herstellbar. Durch die formschlüssige Verbindung zwischen den Dichtkörpern und dem Tragkörper können auch Werkstoffe wie PTFE problemlos zur Anwendung gelangen, die sich wegen ihrer Werkstoffeigenschaften üblicherweise mit einem Tragkörper nicht/nur schlecht stoffschlüssig verbinden lassen.
Die Dichtkörper weisen jeweils eine innere Dichtlippe auf, die den Außenumfang des Tragkörpers dichtend umschließt und jeweils eine äußere Dichtlippe, wobei die äußeren Dichtlippen jeweils an einen Innenumfang eines die jeweilige Stirnseite des Tragkörpers umschließenden Maschinenelements dichtend anlegbar sind. Statisch abgedichtet wird durch die inneren Dichtlippen, die den Außenumfang des Tragkörpers unter elastischer Vorspannung dichtend umschließen. Die elastische Vorspannung erfolgt montagebedingt durch das Aufschieben der Dichtkörper auf den Tragkörper. Die äußeren Dichtlippen werden demgegenüber mittels eines Werkzeugs umgeformt und vorzugsweise unter Temperatur kalibriert. Die Abdichtung gegenüber den beiden den Tragkörper umschließenden Maschinenelementen erfolgt über eine geringe Initialvorspannung der äußeren Dichtlippen, wobei diese Initialvorspannung während der bestimmungsgemäßen Verwendung der Dichtung unter Temperatureinfluss durch einen Memory-Effekt des Dichtungswerkstoffs unterstützt wird. Memory-Effekt bezeichnet das werkstoffbedingte Bestreben eines elastisch verformten Bauteils in seine herstellungsbedingte Form zurückzukehren.

Durch die Verwendung des nicht-elastomeren hochtemperaturbeständigen Dichtungswerkstoffs kann der Dichtkörper auch in Temperaturbereichen zwischen 200°C und 300°C zur Anwendung gelangen und weist auch in diesem Temperaturbereich gleichbleibend gute Gebrauchseigenschaften während einer langen Gebrauchsdauer auf.
Unter der Bezeichnung "hochtemperaturbeständig" wird die Beständigkeit des Dichtungswerkstoffs bei Temperaturen von mehr als 200°C verstanden.

Die Dichtkörper weisen jeweils einen Stützkörper zur Befestigung am Tragkörper auf, wobei die Dichtlippen mit dem entsprechenden Stützkörper verbunden sind. Der Stützkörper sorgt für die Verbindung der Dichtkörper mit dem Tragkörper.

Nach einer ersten Ausgestaltung ist der Stützkörper durch einen Stützring / Führungsring gebildet.

Der Stützring /Führungsring ist auf der der jeweiligen Stirnseite des Tragkörpers axial abgewandten Seite der Dichtlippen angeordnet und mit diesem verbunden. Der Stützring /Führungsring hat nicht nur die Aufgabe, die beiden Dichtlippen aufzunehmen. Jeder Dichtkörper wird durch den in den Außenumfang des Tragkörpers eingeschnappten Stützring / Führungsring in seiner Position relativ zum Tragkörper gehalten. Außenumfangsseitig dient der Stützring / Führungsring der Zentrierung der Dichtung in den beiden Maschinenelementen, die durch die Dichtung dichtend miteinander verbunden werden.

Bevorzugt bestehen beide Dichtkörper jeweils aus einem nicht-elastomeren hochtemperaturbeständigen Dichtungswerkstoff. Dabei ist von Vorteil, dass die gesamte Dichtung dauerhaft in einem Temperaturbereich >200°C zur Anwendung gelangen kann. Solche Bedingungen liegen z. B. dann vor, wenn die Dichtung in Ladeluftsystemen von Lkw oder Pkw eingesetzt wird. Die Dichtung dichtet dann zwei Gehäuse- oder Rohranschlüsse gegenüber heißen und unter einem Überdruck stehenden Gasen verlässlich ab, die durch das Ladeluftsystem strömen.

Die Dichtkörper können jeweils aus PTFE bestehen. PTFE ist ein hochtemperaturbeständiger Dichtungswerkstoff im zuvor beschriebenen Sinne, der auch in Temperaturbereichen über 200°C bis etwa 300°C mit gleichbleibend guten Gebrauchseigenschaften während einer langen Gebrauchsdauer eingesetzt werden kann. Außerdem ist PTFE gegen die meisten abzudichtenden Medien beständig.

Bevorzugt können die Dichtkörper als Gleichteile ausgebildet sein. Hierbei ist von Vorteil, dass die Dichtung insgesamt einfach und kostengünstig herstellbar ist. Für eine Dichtung braucht nur ein Typ Dichtkörper hergestellt und gelagert zu werden. Bei der Herstellung der Dichtung ist durch die Verwendung der Gleichteile die Gefahr von Montagefehlern auf ein Minimum begrenzt.

Die Dichtkörper können in den Außenumfang des Tragkörpers einschnappbar sein. Aufwändiger Montagevorrichtungen zur Montage der Dichtung bedarf es dafür nicht. Die Dichtkörper werden stirnseitig über den Außenumfang des Tragkörpers geschoben und z. B. hinter einer Rastnase in die anschließende Hinterschneidung im Außenumfang des Tragkörpers eingeschnappt.

Die innere und die äußere Dichtlippe der jeweiligen Dichtkörper können, im Längsschnitt der Dichtung betrachtet, im Wesentlichen C-förmig ineinander übergehend ausgebildet sein und jeweils eine Dichtlippenanordnung bilden.

Die Dichtlippenanordnungen können jeweils axial in Richtung der entsprechenden Stirnseite des Tragkörpers, die von dem jeweiligen Dichtkörper umschlossen ist, offen sein. Die einfache Geometrie der Dichtlippenanordnung ist einfach und kostengünstig herstellbar. Außerdem ist von Vorteil, dass eine innere und eine äußere Dichtlippe, die die Dichtungsanordnung bilden, bevorzugt einstückig ineinander übergehend und materialeinheitlich ausgebildet sind. Die Dichtung weist dadurch einen einfachen und teilearmen Aufbau auf und ist besonders einfach montierbar.

Der Stützring/Führungsring und die Dichtlippen können eine Einheit bilden, die einstückig und materialeinheitlich ausgebildet ist. Sowohl die Dichtlippenanordnung, bestehend aus einer inneren und einer äußeren Dichtlippe, als auch der Stützring/Führungsring können dann beispielsweise aus einem PTFE-Werkstoff bestehen. Der Stützring/Führungsring ist dadurch ebenfalls hochtemperaturbeständig, und einer separaten Befestigung der Dichtlippenanordnung am Stützring/Führungsring bedarf es durch die Einstückigkeit nicht.

Der Stützring/Führungsring kann radial außenseitig von einem O-Ring aus elastomerem Werkstoff umschlossen sein.
Der O-Ring kann in einer radial nach außen offenen Einbaunut des Stützrings/Führungsrings angeordnet sein. Hierbei ist von Vorteil, dass die statische Dichtheit auch bei besonders tiefen Temperaturen sichergestellt ist.

Nach einer anderen Ausgestaltung kann es vorgesehen sein, dass der Stützkörper durch einen Klemmring gebildet ist

Der Klemmring kann radial zwischen der inneren und der äußeren Dichtlippe angeordnet sein.

Bevorzugt kann der Klemmring im Wesentlichen L-förmig ausgebildet sein, aus einem metallischen Werkstoff bestehen und unter Zwischenfügung der inneren Dichtlippe den Außenumfang des Tragkörpers umschließen. Auch in diesem Fall kann es vorgesehen sein, dass die innere und die äußere Dichtlippe der jeweiligen Dichtkörper, im Längsschnitt der Dichtung betrachtet, im Wesentlichen C-förmig ineinander übergehend ausgebildet sind und jeweils eine Dichtlippenanordnung bilden. Zur Befestigung einer solchen Dichtlippenanordnung auf dem Außenumfang des Tragkörpers ist der Klemmring vorgesehen. Die innere Dichtlippe wird mittels des Klemmrings an den Außenumfang des Tragkörpers unter elastischer Vorspannung dichtend angepresst, während die äußere Dichtlippe sich dichtend an den Innenumfang des abzudichtenden Maschinenelements anlegt.

Der Klemmring kann als in radialer Richtung wirksame Spreizfeder ausgebildet sein. Eine solche Ausgestaltung ist besonders bei einer Abdichtung unter Kälte von hervorzuhebendem Vorteil. Auch bei Minusgraden ist dadurch eine besonders zuverlässige Abdichtung gewährleistet.

Der Tragkörper kann aus einem metallischen Werkstoff bestehen. Tragkörper aus einem solchen Werkstoff sind temperaturbeständig sowie einfach und kostengünstig herstellbar.

Davon abweichend kann der Tragkörper auch aus einem hochtemperaturbeständigen polymeren Werkstoff bestehen. Dabei ist von Vorteil, dass ein solcher Tragkörper gegen Korrosion beständig ist.

Die Erfindung betrifft außerdem eine Dichtungsanordnung, umfassend eine Dichtung wie zuvor beschrieben, wobei jeder Dichtkörper von jeweils einem Maschinenelement außenumfangsseitig dichtend umschlossen ist, wobei die jeweils äußeren Dichtlippen der Dichtkörper den Innenumfang des jeweiligen Maschinenelements dichtend berühren. Eine Dichtungsanordnung ist beispielsweise Bestandteil eines Ladeluftsystems eines Lkw oder Pkw.

### Kurzbeschreibung der Zeichnung

Vier Ausführungsbeispiele der erfindungsgemäßen Dichtung und der erfindungsgemäßen Dichtungsanordnung werden nachfolgend anhand der Fig. 1 bis 4 näher beschrieben. Diese zeigen jeweils in schematischer Darstellung:
- Fig. 1: ein erstes Ausführungsbeispiel einer erfindungsgemäßen Dichtung in einer erfindungsgemäßen Dichtungsanordnung, bei dem die Stützkörper durch Stützringe/Führungsringe gebildet sind, wobei die Dichtlippen der Dichtkörper einstückig mit den Stützringen/Führungsringen verbunden sind,
- Fig. 2: ein zweites Ausführungsbeispiel einer erfindungsgemäßen Dichtung in einer erfindungsgemäßen Dichtungsanordnung, wobei die Stützkörper durch Klemmringe gebildet sind, die die Dichtlippen auf dem Tragkörper festlegen.
- Fig. 3: ein drittes Ausführungsbeispiel einer erfindungsgemäßen Dichtung in einer erfindungsgemäßen Dichtungsanordnung, wobei die Stützringe/Führungsringe radial außenseitig jeweils von einem O-Ring aus elastomerem Werkstoff umschlossen sind.
- Fig. 4: ein viertes Ausführungsbeispiel einer erfindungsgemäßen Dichtung in einer erfindungsgemäßen Dichtungsanordnung, wobei die Klemmringe als in radialer Richtung wirksame Spreizfedern ausgebildet sind.

### Ausführung der Erfindung

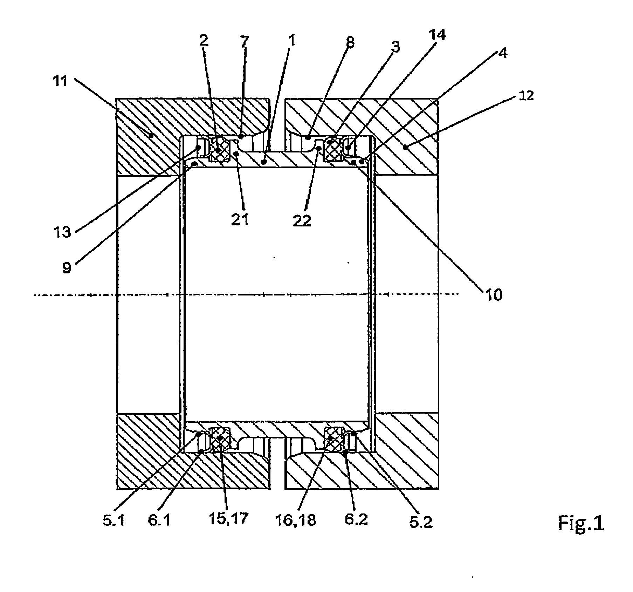

In den Fig. 1 bis 4 ist jeweils ein Ausführungsbeispiel einer Dichtung gezeigt, wobei die Dichtungen jeweils Bestandteil einer Dichtungsanordnung sind.

Die Dichtung umfasst in jedem der hier gezeigten Ausführungsbeispiele einen rohrförmigen Tragkörper 1, der aus einem metallischen Werkstoff besteht. Der Tragkörper 1 weist außenumfangsseitig im Bereich seiner beiden Stirnseiten 9, 10 jeweils eine nutförmige, in radialer Richtung nach außen offene Vertiefung auf, in der die jeweiligen ringförmigen Dichtkörper 2, 3 angeordnet sind. Die Dichtkörper 2, 3 umschließen den Tragkörper 1 jeweils dichtend.

Die hier gezeigten Dichtungsanordnungen werden in Ladeluftsystemen von Lkw oder Pkw verwendet. Für diese Anwendung ist es erforderlich, dass die verwendeten Materialien hochtemperaturbeständig sind. Unter hochtemperaturbeständig wird eine Beständigkeit der verwendeten Werkstoffe bis zumindest 300°C verstanden.
Aus diesem Grund scheiden elastomere Werkstoffe für die ringförmigen Dichtkörper 2, 3 aus.

Die Dichtkörper 2, 3 bestehen in den hier gezeigten Ausführungsbeispielen jeweils aus PTFE, also einem nicht-elastomeren Dichtungswerkstoff, der hochtemperaturbeständig ist.

Jeder der Dichtkörper 2, 3 hat eine radial innere Dichtlippe 5.1, 5.2, die den Außenumfang 4 des Tragkörpers 1 dichtend umschließt. Außerdem umfassen die Dichtkörper 2, 3 radial äußere Dichtlippen 6.1, 6.2, wobei diese radial äußeren Dichtlippen 6.1, 6.2 den Innenumfang 7, 8 der Maschinenelemente 11, 12 dichtend berühren und wobei die Maschinenelemente 11, 12 den Tragkörper 1 außenumfangsseitig umschließen. Die inneren und die äußeren Dichtlippen 5.1, 6.1; 5.2, 6.2 sind C-förmig ineinander übergehend und materialeinheitlich ausgebildet und axial jeweils in Richtung der entsprechenden Stirnseite 9, 10 offen.

In Fig. 1 ist ein erstes Ausführungsbeispiel gezeigt. Die Montage der Dichtkörper 2, 3 auf den Tragkörper 1 erfolgt derart, dass die Dichtkörper 2, 3 in axialer Richtung, ausgehend von der jeweiligen Stirnseite 9, 10, auf den Außenumfang 4 des Tragkörpers 1 aufgeschoben werden, bis sie formschlüssig in die nutförmige Vertiefung im Außenumfang 4 des Tragkörpers 1 einschnappen. Dabei legen sich die inneren Dichtlippen 5.1, 5.2 montagebedingt in korrekter Position dichtend auf den Außenumfang 4 des Tragkörpers 1. Die jeweiligen Außenlippen 6.1, 6.2 werden mittels eines Montagewerkzeugs umgeformt, so dass die Maschinenelemente 11, 12 über die umgeformten Dichtlippen 6.1, 6.2 montiert werden können. Während der bestimmungsgemäßen Verwendung liegen die äußeren Dichtlippen 6.1, 6.2 ebenfalls am Innenumfang 7, 8 der jeweiligen Maschinenelemente 11, 12 dichtend an.

Die Dichtlippenanordnungen 13, 14, die durch die Dichtlippen 5.1, 6.1; 5.2, 6.2 gebildet sind, sind an den Stützkörpern 15, 16 festgelegt, wobei die Stützkörper 15, 16 in dem gezeigten Ausführungsbeispiel durch Stützringe/Führungsringe 17, 18 gebildet sind. Die Stützringe/Fühungsringe17, 18 sind einstückig ineinander übergehend und materialeinheitlich mit den Dichtlippen 5.1, 6.1; 5.2, 6.2 ausgebildet, so dass auch die Stützringe/Führungsringe 17, 18 in dem gezeigten Ausführungsbeispiel aus PTFE bestehen.

Radial innenseitig sind die Stützringe/Führungsringe 17, 18 unter elastischer Vorspannung auf dem Außenumfang 4 des Tragkörpers 1 angeordnet; radial außenseitig sind die Stützringe/Führungsringe 17, 18 dem Innenumfang 7, 8 des jeweiligen Maschinenelements 11, 12 entweder mit einem geringen radialen Abstand benachbart zugeordnet oder die Stützringe/Führungsringe 17, 18 berühren den jeweiligen Innenumfang 7, 8 nur lose anliegend. Durch diesen geringen radialen Abstand oder die lose anliegende Zuordnung der Stützringe/Führungsringe 17, 18 zum jeweiligen Innenumfang 7, 8 können betriebsbedingte Wärmedehnungen kompensiert werden, ohne dass es zu Undichtigkeiten im Bereich der äußeren Dichtlippen 6.1, 6.2 kommt. Der Außenumfang der Stützringe/Führungsringe 17, 18 dient außerdem der Zentrierung der Dichtung in den Maschinenelementen 11, 12. Herstellungsbedingte Abweichungen des Einbauraumes, wie beispielsweise ein Achsversatz oder Schiefstellungen der Teile relativ zueinander, können dadurch ausgeglichen werden.

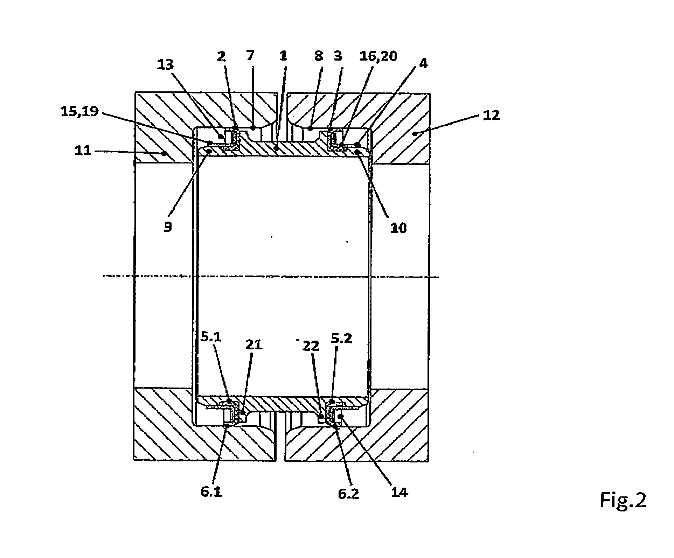

In Fig. 2 ist ein zweites Ausführungsbeispiel einer Dichtungsanordnung mit Dichtung gezeigt, das sich von dem Ausführungsbeispiel gemäß Fig. 1 dadurch unterscheidet, dass die Stützkörper 15, 16 durch Klemmringe 19, 20 gebildet sind. Die Klemmringe 19, 20 bestehen aus einem metallischen Werkstoff, sind in radialer Richtung zwischen der inneren 5.1, 5.2 und der äußeren Dichtlippe 6.1, 6.2 angeordnet und klemmen die inneren Dichtlippen 5.1, 5.2 auf dem Außenumfang 4 des Tragkörpers 1 dichtend ein.

Sowohl die Stützringe/Führungsringe 17, 18 aus dem Ausführungsbeispiel Fig. 1 als auch die Klemmringe 19, 20 aus dem Ausführungsbeispiel Fig. 2 sorgen für eine zusätzliche Abdichtung an den Radialflanschen 21, 22 des Tragkörpers 1.
In Fig. 1 berühren die aus dem Dichtungswerkstoff bestehenden Stützringe/Führungsringe 17, 18 die entsprechenden Radialflansche 21, 22; in Fig. 2 sorgen die Klemmringe 19, 20 dafür, dass die Übergangsbereiche der Dichtlippenanordnungen 13, 14 zwischen den inneren Dichtlippen 5.1, 5.2 und den äußeren Dichtlippen 6.1, 6.2 unter axialer Vorspannung dichtend an die Radialflansche 21, 22 angedrückt werden.

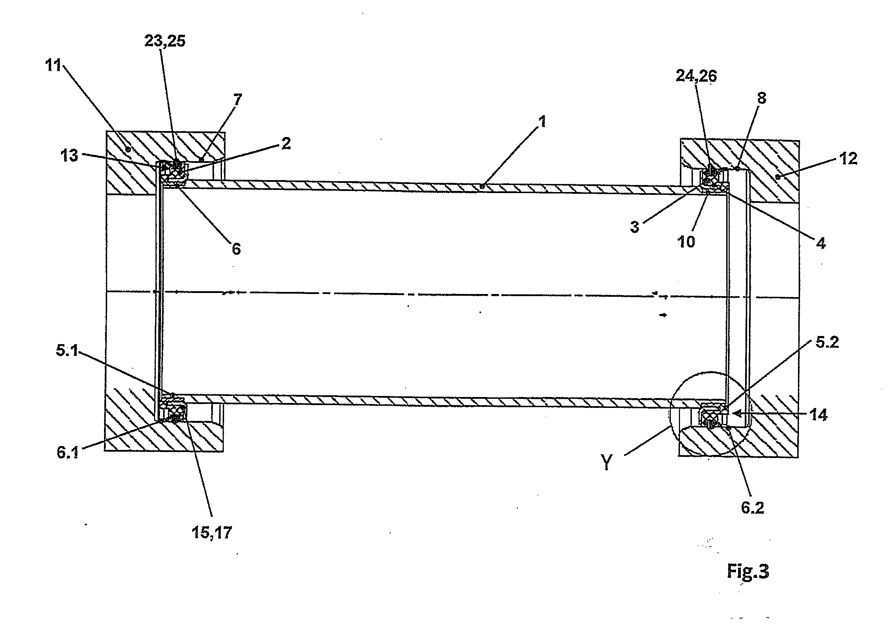

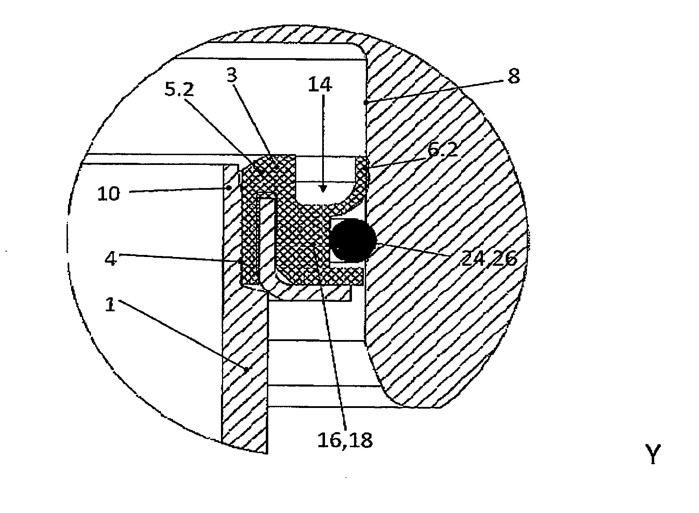

In Fig. 3 ist ein drittes Ausführungsbeispiel einer erfindungsgemäßen Dichtung in einer erfindungsgemäßen Dichtungsanordnung gezeigt, wobei die Stützringe/Führungsringe 17, 18 radial außenseitig jeweils von einem O-Ring 23, 24 aus elastomerem Werkstoff umschlossen sind. Die O-Ringe 23, 24 sind jeweils in einer radial nach außen offenen Einbaunut 25, 26 des Stützrings/Führungsrings 17, 18 angeordnet und dichten gegenüber den Maschinenelementen 11, 12 ab. Auch bei Minusgraden ist dadurch eine besonders sichere statische Abdichtung gewährleistet.

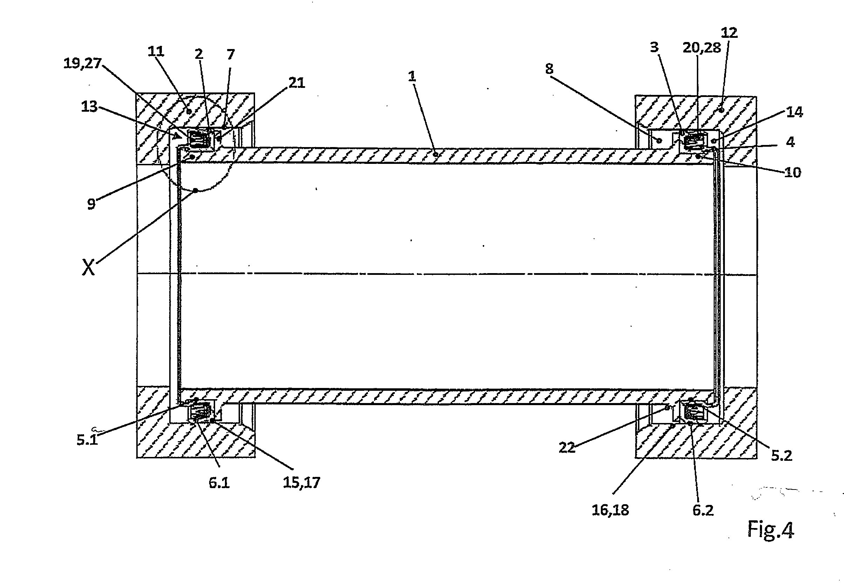

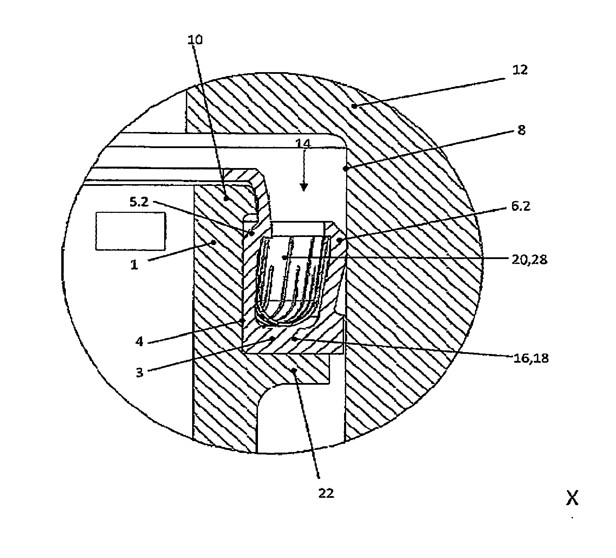

In Fig. 4 ist ein viertes Ausführungsbeispiel einer erfindungsgemäßen Dichtung in einer erfindungsgemäßen Dichtungsanordnung gezeigt, wobei sich die Dichtung aus Fig. 4 vom Ausführungsbeispiel gemäß Fig. 2 im Wesentlichen durch die Gestalt der Klemmringe 19, 20 unterscheidet. Die Klemmringe 19, 20 sind in Fig. 4 jeweils als Spreizfedern 27, 28 ausgebildet, die im Querschnitt betrachtet im Wesentlichen C-förmig ausgebildet sind, entsprechend den jeweils dazugehörenden Dichtlippenanordnungen 13, 14. Die Spreizfedern 27, 28 sorgen dafür, dass die Dichtlippen 5.1, 6.1; 5.2, 6.2 der jeweiligen Dichtlippenanordnungen 13, 14 in radialer Richtung aufgespreizt werden, um dadurch eine verbesserte Anpressung an die abzudichtenden Flächen und dadurch eine verbesserte Abdichtung zu erreichen. Diese Aufspreizung macht sich besonders bei Abdichtung unter Kälte positiv bemerkbar. Auch bei Minusgraden ist eine zuverlässige Abdichtung gewährleistet.

Im hier gezeigten Ausführungsbeispiel sind die jeweils inneren Dichtlippen 5.1, 5.2 axial in Richtung der jeweils benachbarten Stirnseiten 9, 10 des Tragkörpers 1 verlängert und in radialer Richtung nach innen um die Stirnseiten 9, 10 herum gezogen. Dadurch ist sichergestellt, dass die Stirnseiten 9, 10 des Tragkörpers 1 nicht direkt mit den jeweils axial angrenzenden Maschinenelementen 11, 12 in Berührung kommen.

Eine solche Abschirmung der Stirnseiten 9, 10 des Tragkörpers 1 von den Maschinenelementen 11, 12 durch die verlängerten und radial nach innen herum gezogenen inneren Dichtlippen 5.1, 5.2 kann auch bei den anderen Ausführungsbeispielen gemäß Fig. 1 bis Fig. 3 zur Anwendung gelangen.

## Patentansprüche

1. Dichtung, umfassend einen rohrförmigen Tragkörper (1) mit Stirnseiten (9, 10) und zwei ringförmige Dichtkörper (2, 3), wobei der Tragkörper (1) und die Dichtkörper (2, 3) formschlüssig miteinander verbunden sind, wobei der Tragkörper (1) stirnseitig beiderseits jeweils von einem der Dichtkörper (2, 3) aussenumfangsseitig dichtend umschlossen ist, wobei die Dichtkörper (2, 3) jeweils eine innere Dichtlippe (5.1, 5.2) aufweisen, die den Außenumfang (4) des Tragkörpers(1) dichtend umschließt und jeweils eine äußere Dichtlippe (6.1, 6.2), wobei die äußeren Dichtlippen (6.1, 6.2) jeweils an einen Innenumfang (7, 8) eines die jeweilige Stirnseite (9, 10) des Tragkörpers (1) umschließenden Maschinenelements (11, 12) dichtend anlegbar sind, wobei zumindest einer der Dichtkörper (2, 3) aus einem nicht-elastomeren hochtemperaturbeständigen Dichtungswerkstoff besteht, wobei die Dichtkörper (2, 3) jeweils einen Stützkörper (15, 16) zur Befestigung am Tragkörper (1) aufweisen, wobei die Dichtlippen (5.1, 6.1; 5.2, 6.2) mit dem entsprechenden Stützkörper (15, 16) verbunden sind, wobei der Stützkörper (15, 16) durch einen Stützring / Führungsring (17, 18) gebildet ist und wobei der Stützring / Führungsring (17, 18) auf der der jeweiligen Stirnseite (9, 10) des Tragkörpers (1) axial abgewandten Seite der Dichtlippen (5.1, 6.1; 5.2, 6.2) angeordnet und mit diesen verbunden ist, **dadurch gekennzeichnet, dass** die inneren Dichtlippen (5.1, 5.2) axial in Richtung der entsprechenden, jeweils benachbarten Stirnseiten (9, 10) des Tragkörpers (1) verlängert und in radialer Richtung nach innen um die Stirnseiten (9, 10) herum gezogen sind.

2. Dichtung nach Anspruch 1, **dadurch gekennzeichnet, dass** beide Dichtkörper (2, 3) jeweils aus einem nicht-elastomeren hochtemperaturbeständigen Dichtungswerkstoff bestehen.

3. Dichtung nach einem der Ansprüche 1 oder 2, **dadurch gekennzeichnet**, das die Dichtkörper (2, 3) jeweils aus PTFE bestehen.

4. Dichtung nach einem der Ansprüche 1 bis 3, **dadurch gekennzeichnet, dass** die Dichtkörper (2, 3) als Gleichteile ausgebildet sind.

5. Dichtung nach einem der Ansprüche 1 bis 4, **dadurch gekennzeichnet, dass** die Dichtkörper (2, 3) in den Außenumfang (4) des Tragkörpers (1) einschnappbar sind.

6. Dichtung nach einem der Ansprüche 1 bis 5, **dadurch gekennzeichnet, dass** die innere (5.1, 5.2) und die äußere Dichtlippe (6.1, 6.2) der jeweiligen Dichtkörper (2, 3), im Längsschnitt der Dichtung betrachtet, im Wesentlichen C-förmig ineinander übergehend ausgebildet sind und jeweils eine Dichtlippenanordnung (13, 14) bilden.

7. Dichtung nach Anspruch 6, **dadurch gekennzeichnet, dass** die Dichtlippenanordnungen (13, 14) jeweils axial in Richtung der entsprechenden Stirnseite (9, 10) des Tragkörpers (1), die von dem jeweiligen Dichtkörper (2, 3) umschlossen ist, offen sind.

8. Dichtung nach einem der Ansprüche 1 bis 7, **dadurch gekennzeichnet, dass** der Stützring/Führungsring (17, 18) und die Dichtlippen (5.1, 6.1; 5.2, 6.2) einstückig und materialeinheitlich ausgebildet sind.

9. Dichtung nach einem der Ansprüche 1 bis 8, **dadurch gekennzeichnet, dass** der Stützring/Führungsring (17, 18) radial außenseitig von einem O-Ring (23, 24) aus elastomerem Werkstoff umschlossen ist.

10. Dichtung nach Anspruch 9, **dadurch gekennzeichnet, dass** der O-Ring (23, 24) in einer radial nach außen offenen Einbaunut (25, 26) des Stützrings/Führungsrings (17, 18) angeordnet ist.

11. Dichtung nach Anspruch 1, **dadurch gekennzeichnet, dass** der Stützkörper (15, 16) durch einen Klemmring (19, 20) gebildet ist.

12. Dichtung nach Anspruch 11, **dadurch gekennzeichnet, dass** der Klemmring (19, 20) radial zwischen der inneren (5.1, 5.2) und der äußeren Dichtlippe (6.1, 6.2) angeordnet ist.

13. Dichtung nach einem der Ansprüche 11 oder 12, **dadurch gekennzeichnet, dass** der Klemmring (19, 20) im Wesentlichen L-förmig ausgebildet ist, aus einem metallischen Werkstoff besteht und unter Zwischenfügung der inneren Dichtlippe (5.1, 5.2) den Außenumfang (4) des Tragkörpers (1) umschließt.

14. Dichtung nach einem der Ansprüche 11 oder 12, **dadurch gekennzeichnet, dass** der Klemmring (19, 20) als in radialer Richtung wirksame Spreizfeder (27, 28) ausgebildet ist.

15. Dichtung nach einem der Ansprüche 1 bis 14, **dadurch gekennzeichnet, dass** der Tragkörper (1) aus einem metallischen Werkstoff besteht.

16. Dichtungsanordnung, umfassend eine Dichtung nach einem der Ansprüche 1 bis 15, **dadurch gekennzeichnet, dass** jeder Dichtkörper (2, 3) von jeweils einem Maschinenelement (11, 12) aussenumfangsseitig dichtend umschlossen ist und dass die jeweils äußeren Dichtlippen (6.1, 6.2) der Dichtkörper (2, 3) den Innenumfang (7, 8) des jeweiligen Maschinenelements (11, 12) dichtend berühren.

## Claims

1. Seal comprising a tubular bearing body (1) having end sides (9, 10), and two annular sealing bodies (2, 3), wherein the bearing body (1) and the sealing bodies (2, 3) are connected together in a form-fitting manner, wherein the end side of the bearing body (1) is enclosed on both sides in a manner sealing the outer circumference in each case by one of the sealing bodies (2, 3), wherein the sealing bodies (2, 3) each have an inner sealing lip (5.1, 5.2) which encloses the outer circumference (4) of the bearing body (1) in a sealing manner, and each have an outer sealing lip (6.1, 6.2), wherein the outer sealing lips (6.1, 6.2) can each be placed in a sealing manner against an inner circumference (7, 8) of a machine element (11, 12) that encloses the respective end side (9, 10) of the bearing body (1), wherein at least one of the sealing bodies (2, 3) consists of a non-elastomeric high-temperature-resistant sealing material, wherein the sealing bodies (2, 3) each have a supporting body (15, 16) for fastening to the bearing body (1), wherein the sealing lips (5.1, 6.1; 5.2, 6.2) are connected to the corresponding supporting body (15, 16), wherein the supporting body (15, 16) is formed by a supporting ring/guide ring (17, 18), and wherein the supporting ring/guide ring (17, 18) is arranged on that side of the sealing lips (5.1, 6.1; 5.2, 6.2) which is axially remote from the respective end side (9, 10) of the bearing body (1), and is connected to said sealing lips (5.1, 6.1; 5.2, 6.2), **characterized in that** the inner sealing lips (5.1, 5.2) are axially extended in the direction of the corresponding, respectively adjacent end sides (9, 10) of the bearing body (1) and are drawn inwardly in the radial direction around the end sides (9, 10).

2. Seal according to Claim 1, **characterized in that** the two sealing bodies (2, 3) each consist of a non-elastomeric high-temperature-resistant sealing material.

3. Seal according to either of Claims 1 and 2, **characterized in that** the sealing bodies (2, 3) each consist of PTFE.

4. Seal according to one of Claims 1 to 3, **characterized in that** the sealing bodies (2, 3) are formed as identical parts.

5. Seal according to one of Claims 1 to 4, **characterized in that** the sealing bodies (2, 3) can be snap-fitted into the outer circumference (4) of the bearing body (1).

6. Seal according to one of Claims 1 to 5, **characterized in that** the inner sealing lip (5.1, 5.2) and the outer sealing lip (6.1, 6.2) of each sealing body (2, 3), as seen in longitudinal section of the seal, are formed in a manner merging into one another substantially in a C-shape and each form a sealing lip arrangement (13, 14).

7. Seal according to Claim 6, **characterized in that** the sealing lip arrangements (13, 14) are each open axially in the direction of the corresponding end side (9, 10) of the bearing body (1), said end side (9, 10) being enclosed by the respective sealing body (2, 3).

8. Seal according to one of Claims 1 to 7, **characterized in that** the supporting ring/guide ring (17, 18) and the sealing lips (5.1, 6.1; 5.2, 6.2) are formed in one piece and in a materially integral manner.

9. Seal according to one of Claims 1 to 8, **characterized in that** the supporting ring/guide ring (17, 18) is enclosed radially on the outside by an 0-ring (23, 24) composed of elastomeric material.

10. Seal according to Claim 9, **characterized in that** the 0-ring (23, 24) is arranged in an installation groove (25, 26) in the supporting ring/guide ring (17, 18), said installation groove being open radially towards the outside.

11. Seal according to Claim 1, **characterized in that** the supporting body (15, 16) is formed by a clamping ring (19, 20).

12. Seal according to Claim 11, **characterized in that** the clamping ring (19, 20) is arranged radially between the inner sealing lip (5.1, 5.2) and the outer sealing lip (6.1, 6.2).

13. Seal according to either of Claims 11 and 12, **characterized in that** the clamping ring (19, 20) is formed in a substantially L-shaped manner, consists of a metallic material and encloses the outer circumference (4) of the bearing body (1) with the inner sealing lip (5.1, 5.2) being fitted inbetween.

14. Seal according to either of Claims 11 and 12, **characterized in that** the clamping ring (19, 20) is formed as an expanding spring (27, 28) that acts in the radial direction.

15. Seal according to one of Claims 1 to 14, **characterized in that** the bearing body (1) consists of a metallic material.

16. Sealing arrangement comprising a seal according to one of Claims 1 to 15, **characterized in that** each sealing body (2, 3) is enclosed in a manner sealing the outer circumference in each case by a machine element (11, 12), and **in that** the respectively outer sealing lips (6.1, 6.2) of the sealing bodies (2, 3) make contact with the inner circumference (7, 8) of the respective machine element (11, 12) in a sealing manner.

## Revendications

1. Joint d'étanchéité, comprenant un corps porteur tubulaire (1) avec des côtés frontaux (9, 10) et deux corps d'étanchéité annulaires (2, 3), dans lequel le corps porteur (1) et les corps d'étanchéité (2, 3) sont assemblés l'un à l'autre par emboîtement, dans lequel le corps porteur (1) est entouré frontalement sur les deux côtés, de façon étanche du côté de la périphérie extérieure, respectivement par un des corps d'étanchéité (2, 3), dans lequel les corps d'étanchéité (2, 3) présentent respectivement une lèvre d'étanchéité intérieure (5.1, 5.2) qui entoure de façon étanche la périphérie extérieure (4) du corps porteur (1) et aussi respectivement une lèvre d'étanchéité extérieure (6.1, 6.2), dans lequel les lèvres d'étanchéité extérieures (6.1, 6.2) peuvent être appliquées de façon étanche respectivement sur une périphérie intérieure (7, 8) d'un élément de machine (11, 12) entourant le côté frontal respectif (9, 10) du corps porteur (1), dans lequel au moins un des corps d'étanchéité (2, 3) se compose d'un matériau d'étanchéité non élastomère résistant aux hautes températures, dans lequel les corps d'étanchéité (2, 3) présentent respectivement un corps d'appui (15, 16) pour la fixation au corps porteur (1), dans lequel les lèvres d'étanchéité (5.1, 6.1; 5.2, 6.2) sont assemblées au corps d'appui correspondant (15, 16), dans lequel le corps d'appui (15, 16) est formé par une bague d'appui/bague de guidage (17, 18) et dans lequel la bague d'appui/bague de guidage (17, 18) est disposée sur le côté des lèvres d'étanchéité (5.1, 6.1; 5.2, 6.2) situé axialement à l'opposé du côté frontal respectif (9, 10) du corps porteur (1) et est assemblée à celles-ci, **caractérisé en ce que** les lèvres d'étanchéité intérieures (5.1, 5.2) sont prolongées axialement en direction des côtés frontaux correspondants (9, 10) du corps porteur (1) respectivement proches et sont tirées en direction radiale vers l'intérieur autour des côtés frontaux (9, 10).

2. Joint d'étanchéité selon la revendication 1, **caractérisé en ce que** les deux corps d'étanchéité (2, 3) se composent respectivement d'un matériau d'étanchéité non élastomère résistant aux hautes températures.

3. Joint d'étanchéité selon l'une des revendications 1 ou 2, **caractérisé en ce que** les corps d'étanchéité (2, 3) se composent respectivement de PTFE.

4. Joint d'étanchéité selon l'une quelconque des revendications 1 à 3, **caractérisé en ce que** les corps d'étanchéité (2, 3) sont formés par des pièces identiques.

5. Joint d'étanchéité selon l'une quelconque des revendications 1 à 4, **caractérisé en ce que** les corps d'étanchéité (2, 3) peuvent être insérés par encliquetage dans la périphérie extérieure (4) du corps porteur (1).

6. Joint d'étanchéité selon l'une quelconque des revendications 1 à 5, **caractérisé en ce que** la lèvre d'étanchéité intérieure (5.1, 5.2) et la lèvre d'étanchéité extérieure (6.1, 6.2) des corps d'étanchéité respectifs (2, 3), considérées en coupe longitudinale du joint d'étanchéité, sont configurées essentiellement en forme de C se prolongeant sans interruption l'une dans l'autre et forment respectivement un agencement de lèvres d'étanchéité (13, 14).

7. Joint d'étanchéité selon la revendication 6, **caractérisé en ce que** les agencements de lèvres d'étanchéité (13, 14) sont respectivement ouverts axialement en direction du côté frontal correspondant (9, 10) du corps porteur (1), qui est entouré par le corps d'étanchéité respectif (2, 3).

8. Joint d'étanchéité selon l'une quelconque des revendications 1 à 7, **caractérisé en ce que** la bague d'appui/bague de guidage (17, 18) et les lèvres d'étanchéité (5.1, 6.1; 5.2, 6.2) sont réalisées en une seule pièce et en un seul matériau.

9. Joint d'étanchéité selon l'une quelconque des revendications 1 à 8, **caractérisé en ce que** la bague d'appui/bague de guidage (17, 18) est entourée radialement du côté extérieur par un joint torique (23, 24) en matériau élastomère.

10. Joint d'étanchéité selon la revendication 9, **caractérisé en ce que** le joint torique (23, 24) est disposé dans une rainure d'encastrement (25, 26) ouverte radialement vers l'extérieur de la bague d'appui/bague de guidage (17, 18).

11. Joint d'étanchéité selon la revendication 1, **caractérisé en ce que** le corps d'appui (15, 16) est formé par une bague de serrage (19, 20).

12. Joint d'étanchéité selon la revendication 11, **caractérisé en ce que** la bague de serrage (19, 20) est disposée radialement entre la lèvre d'étanchéité intérieure (5.1, 5.2) et la lèvre d'étanchéité extérieure (6.1, 6.2).

13. Joint d'étanchéité selon l'une des revendications 11 ou 12, **caractérisé en ce que** la bague de serrage (19, 20) est configurée essentiellement en forme de L, se compose d'un matériau métallique et entoure, avec interposition de la lèvre d'étanchéité intérieure (5.1, 5.2), la périphérie extérieure (4) du corps porteur (1).

14. Joint d'étanchéité selon l'une des revendications 11 ou 12, **caractérisé en ce que** la bague de serrage (19, 20) est réalisée sous la forme d'un ressort écarteur (27, 28) agissant en direction radiale.

15. Joint d'étanchéité selon l'une quelconque des revendications 1 à 14, **caractérisé en ce que** le corps porteur (1) se compose d'un matériau métallique.

16. Agencement de joint d'étanchéité, comprenant un joint d'étanchéité selon l'une quelconque des revendications 1 à 15, **caractérisé en ce que** chaque corps d'étanchéité (2, 3) est respectivement entouré de façon étanche sur le côté périphérique extérieur par un élément de machine (11, 12) et **en ce que** les lèvres d'étanchéité respectivement extérieures (6.1, 6.2) des corps d'étanchéité (2, 3) touchent de façon étanche la périphérie intérieure (7, 8) de l'élément de machine respectif (11, 12).
